(19) Europäisches Patentamt
European Patent Office
Office européen des brevets

(11) EP 0 537 675 B1

(12) **EUROPEAN PATENT SPECIFICATION**

(45) Date of publication and mention
of the grant of the patent:
**31.01.1996 Bulletin 1996/05**

(51) Int Cl.6: **C09C 3/06**, C09C 1/36,
C09C 1/30, C09D 5/00

(21) Application number: **92117455.3**

(22) Date of filing: **13.10.1992**

(54) **Pigment for sensing gas leakage and process for producing the same**

Pigment zum Aufspüren eines Gasverlustes und sein Herstellungsverfahren

Pigment pour détecter une fuite de gaz et procédé de production

(84) Designated Contracting States:
**BE DE ES FR GB IT NL SE**

(30) Priority: **14.10.1991 JP 293604/91**
**14.10.1991 JP 293605/91**

(43) Date of publication of application:
**21.04.1993 Bulletin 1993/16**

(73) Proprietors:
• **ISHIHARA SANGYO KAISHA, LTD.**
**Nishi-ku, Osaka (JP)**
Designated Contracting States:
**BE DE ES FR GB IT NL SE**
• **ACT RESEARCH INC.**
**Yokkaichi-shi, Mie-ken (JP)**
Designated Contracting States:
**DE FR GB**

(72) Inventors:
• **Sakamoto, Masashi**
**Yokkaichi-shi (JP)**
• **Okuda, Haruo**
**Yokkaichi-shi (JP)**
• **Futamata, Hideo**
**Tsu-shi (JP)**

(74) Representative: **Henkel, Feiler, Hänzel & Partner**
**D-81675 München (DE)**

(56) References cited:
• **DATABASE WPIL Section Ch, Week 9246,**
**Derwent Publications Ltd., London, GB; Class**
**E36, AN 92-378269**
• **PATENT ABSTRACTS OF JAPAN vol. 15, no.**
**256 (C-845)28 June 1991**
• **PATENT ABSTRACTS OF JAPAN vol. 13, no.**
**134 (C-581)4 April 1989**
• **DATABASE WPI Section Ch, Week 7741,**
**Derwent Publications Ltd., London, GB; Class**
**E31, AN 77-73404Y**

**Description**

BACKGROUND OF THE INVENTION

Field of the Invention

The present invention relates to a pigment for sensing gas leakage from a chemical reaction apparatus by color change of the pigment, and more particularly, to a pigment for sensing gas leakage comprising a particulate substrate having thereon at least one selected from the group consisting of platinum group metal oxides, hydroxides and hydrated oxides, and a process for producing the same.

Description of Related Art

Gases such as hydrogen, carbon monoxide, and the like have been widely used in industry. There is generally a continuous danger of gas leakage from chemical reaction apparatuses using or making the gases owing to a higher kinetic energy possessed by the gases compared to those of liquids or solids. Particularly, hydrogen is a gas having the highest molecular kinetic velocity and the highest diffusibility so that it is liable to leak resulting in formation of a mixture of the hydrogen and the oxygen from air so-called detonating gas which can cause vigorously an explosive reaction accompanying sometimes with destruction of chemical reaction apparatuses or disaster to workers.

There have been employed Various means for sensing gas leakage from the chemical reaction apparatuses such as ① a method of locating a site causing gas leakage by disposing many manometers at various parts of gas passing devices in the chemical reaction apparatuses such as gas inlet pipes, reaction vessels, gas outlet pipes and the like, and detecting a variation in pressure indicated with the manometers, and ② a method comprising the use of a sensing sheet impregnated with palladium oxide hydrate as disclosed in Japanese Patent Publication (Post-Exam.) 57-57977.

However, the method ① has disadvantages that the variation in gas pressure may be occasionally attributed to cloggings with reactants in the reaction apparatus rather than gas leakage, and that exsistence and location of gas leakage are not precisely detected, and that slight leakage from cracks and fine pits generated due to deterioration of structural materials of the apparatus can not be detected. Similarly, the method ② has not a few problems to be overcome that gas leaking sites can not be located unless laborious work is necessary, and that slight leakage is difficult to locate, and that the method is unsatisfactory for continuously monitoring gas leakage.

SUMMARY OF THE INVENTION

It is an object of the present invention to provide a pigment for sensing gas leakage comprising a particulate substrate having at least one selected from the group consisting of oxides, hydroxides and hydrated oxides of platinum group metals deposited thereon.

It is another object of the present invention to provide a process for producing the aforementioned pigment for sensing gas leakage.

DETAILED DESCRIPTION OF PREFERRED EMBODIMENTS

We have been made a research on a process for sensing precisely and conveniently a leakage of combustible gases such as hydrogen, carbon monoxide, acetylene, methane, and the like from chemical reaction apparatuses. As a result, we have found that existence and locations of gas leakage can be detected by applying a coating formulation containing pigment particles having a compound of a platinum group metal on the surface thereof, instead of ordinary paints, onto the surfaces of outer walls and conduits of the chemical reaction apparatuses and observing any color change of the coating caused only at a location of gas leakage. It has been further found that the pigment particles having the platinum group metal compound and a specific compound other than the platinum group metal compound on the surface thereof are improved in weatherability or dispersibility. That is, the present invention provides ① a pigment for sensing gas leakage comprising a particulate substrate having at least one selected from the group consisting of oxides, hydroxides and hydrated oxides of platinum group metals (referred to as platinum group compounds hereinafter) present on the surface thereof, and ② a pigment for sensing gas leakage comprising a particulate substrate having at least one of platinum group compounds present on the surface thereof, and in addition having at least one selected from the group consisting of oxides, hydroxides and hydrated oxides of aluminum, silicon, titanium, zinc, zirconium, tin, antimony and cerium (referred to as a surface coating agent) present on the surface thereof.

The pigment for sensing the gas leakage according to the present invention is such that ① at least one of the platinum group compounds is present on the surface of a substrate and that ② at least one of the platinum group compounds is present, and in addition, at least one of the surface coating agents is also present on the surface of a substrate.

The pigments are discolored to blackish color by reacting with leaked gases. The term "present" as used herein means that the platinum group compounds and the surface coating agents are coated, deposited, or precipitated on, or supported on, or adhereing to directly or indirectly all or part of the surface of a particulate substrate. The platinum group metals include palladium, platinum, rhodium, and the like classified as the platinum group, at least one of the compounds of which is present on the particulate substrate. From the aforementioned platinum group compounds, suitable one to be practically used can be selected depending upon a gas to be detected. However, oxides, hydroxides and hydrated oxides of palladium are preferred because of their shorter response time and higher degree of color change. Most preferred are hydroxides and hydrated oxides of palladium. The substrates to be used in the present invention include inorganic pigment particles which have been incorporated into ordinary paints to be applied onto outer walls of chemical reaction apparatuses, for example, extender pigments such as barium sulfate, calcium carbonate, clay, silica powder; white pigments such as zinc white, white lead, titanium dioxide; yellow pigments such as chrome yellow, barium chromate, titanium yellow; and other colored pigments. White pigments are preferred because their color change is easily discernible. Preferred white pigments are titanium dioxide particles having an average particle size of 0.01 to 0.5 $\mu m$, most preferably those having an average particle size of 0.1 to 0.3 $\mu m$ which are excellent in hiding power. The use of the latter enables white pigments having a higher gas sensing ability and excellent white pigmental characteristics to be produced. The platinum group compounds such as those of palladium, platinum, rhodium and the like may be present on the aforementioned substrate particles in the form of even or uneven coating or adhered film on or near the all or part of the surfaces of the particles. Alternatively, the platinum group compounds having a finer particle size than those of the substrate particles may be deposited, precipitated, or supported directly on or indirectly near the surfaces of the substrate particles. The platinum group compounds are applied in an amount of 0.5 to 10 % by weight, preferably 1 to 5 % by weight as expressed by the platinum group metal oxide based on the weight of the substrate. An amount of the compounds lower than 0.5 % by weight may cause insufficient color change to detect gas leakage, while an amount of higher than 10 % by weight is uneconomical with no further improvement in the sensing function being expected.

One embodiment of the pigment according to the present invention comprises a particulate substrate having at least one of the platinum group compounds present on the surface thereof. Another embodiment according to the present invention comprises a particulate substrate having at least one of the platinum group compounds present on the surface thereof, on which further at least one of the surface coating agents is present. In the latter case, the pigments have an improved weatherability and an improved dispersibility at formulating paints, and even when they are applied onto outer walls of outdoor-disposed chemical reaction apparatuses, they exhibit less deterioration of coating films and less reduction in sensing ability allowing the safety of the chemical reaction apparatus to be maintained for a prolonged period of time. The amount of the surface coating agents to be used is 1 to 10 % by weight, preferably 1 to 5 % by weight in total weight of oxides in the surface coating agents based on the weight of the substrate particles. An amount of lower than 1 % by weight leads to insufficient improvement in effects such as dispersibility and the like, while an amount of higher than 10 % by weight is not expected to afford further improvement in the aforementioned effects.

The pigments for sensing gas leakage can be produced by depositing the platinum group metal compounds on the surfaces of the substrate particles (a first coating step), and then, if necessary, dipositing the surface coating agents on the surface (a second coating step). The first and second coating steps may be conducted by ① a method where substrate particles are mixed with a powder or a solution of one or more of metal compounds such as platinum group metal salts and compounds of aluminum, silicon, titanium, zinc, zirconium, tin, antimony, cerium, and the like, or dispersed in the solution, or by ② a method where a powder or a solution of one or more of metal compounds such as platinum group metal salts and compounds of aluminum, silicon, titanium, zinc, zirconium, tin, antimony, cerium, and the like, is added to a slurry of substrate particles, followed by hydrolysis, or by ③ a method where the solution of the metal compounds as in above ② is added to the slurry of substrate particles, and thereafter neutralized. Especially, the aforementioned method ③ employing neutralization is preferred because it enables uniform deposition of the platinum group compounds and the surface coating agents on the surfaces of the substrate particles.

The platinum group metal salts include, for example, platinum group metal chlorides, sulfates, nitrates, acetates and the like, and may be used in the form of a solution in water or an acidic solution produced by adding an acid to the aqueous solution as desired.

In the present invention, the aforementioned method ③ using neutralization consists of (a) the steps of adding the platinum group metal salts to a slurry of the substrate particles, and then neutralizing the resulting mixture with an alkali or an acid being added, or (b) the steps of adding the platinum group metal salts and an alkali or an acid to a slurry of the substrate particles while maintaining the pH of the slurry from 3 to 11, preferably from 6 to 11 specifically in case mineral acid salts of the platinum group metals are used, most preferably from 8 to 11, to neutralize the mixture, or (c) the steps of premixing a slurry of the substrate particles with a higher amount of an alkali or an acid than required to neutralize the platinum group metal salts, and then adding a platinum group metal salt to neutralize. The method consists of the steps (b) is most preferred because it allows the fine platinum group compounds to be present more uniformly on the surfaces of the substrate particles with a lower amount of the platinum group compounds required to be used. The alkalis to be used for the neutralization include sodium hydroxide, potassium hydroxide, sodium carbonate, and ammonia. The acids to be used include hydrochloric acid, sulfuric acid, nitric acid, and acetic acid. The temperature for the neutralization reaction is suitably in the range of 50 to 90 °C .

The second coating step according to the present invention is generally performed as follows: Either to the slurry of the substrate particles-treated with the platinum group metal compounds as mentioned above, or another slurry obtained by separating solids from the slurry prepared above and, if necessary,drying and/or heating the solids at a temperature of 250 to 600 °C, and then dispersing the solids, is added at least one of aqueous solutions of inorganic salts of metals such as aluminum, silicon, titanium, zinc, zirconium, tin, antimony, and cerium, followed by neutralization with an alkali or an acid controlling the temperature higher than 50 °C. The water-soluble inorganic salts include, for example, aluminum sulfate, aluminum chloride, sodium aluminate, sodium silicate, potassium silicate, titanium sulfate, titanium tetrachloride, zinc sulfate, zinc nitrate, zirconium oxychloride, zirconium chloride, zirconium sulfate, zirconyl sulfate, zirconium nitrate, stannous chloride, stannic chloride, sodium stannate, antimony trichloride, cerium nitrate, cerium ammonium nitrate, and cerium sulfate. Although the neutralizing process may be conducted by steps according to those (a), (b), or (c) as described above, preferred procedure is to effect the neutralization by adding the aforementioned solution of water-soluble inorganic salts and an alkali or an acid while maintaining the pH of the slurry of the substrate particles from 4 to 10 as in the above steps (b). The alkalis or acids to be used for neutralizing agents include those listed above.

The pigments, on which the platinum group compounds, or in addition the surface coating agents have been present, are separated as by filtration, and if necessary, washed and then dried. The resultant dry product may be heated at a temperature in the range of 250 to 600 °C to enhance desirably its color changing ability for sensing gas.

The pigments for sensing gas leakage obtained as described above according to the present invention are milled with any means for powdering them, and then mixed with a resin to produce a paint composition, which is used by applying to the surfaces of the outer walls and conduits of the chemical reaction apparatuses. Milling means include gas stream mills such as a jet mill, impact crushers such as a pulverizer, compression mills such as a ball mill. As paint ingredients for preparing a paint including the thus obtained pigment for sensing gas leakage according to the present invention, may be used various materials: as a coating film-forming agent, natural resins such as shellac or copal; modified resins such as rosin esters; synthetic resins such as phenolic resin, urea resin, melamine resin, phthalic resin, acrylic resin, epoxy resin, vinyl resin, urethane resin, alkyd resin or polyester resin; cellulose derivatives such as acetyl cellulose; rubber derivatives such as chlorinated rubber, cyclized rubber or synthetic rubber; and water-soluble compounds such as polyvinyl alcohol, casein or carboxymethyl cellulose. Of these materials are preferred acrylic resin and phthalic resin.

Furthermore, as other additives to improve dispersion of the pigment or drying, curing or properties of paint films, may be used various known materials: a drying promoter such as lead naphthenate, manganese naphthenate or cobalt naphthenate; a curing agent and a plasticizing agent such as dibutyl phthalate or castor oil; a dispersing agent such as various surfactants or lecithin; an emulsifying agent and rust-inhibiting agent such as zinc chromate; an anti-skinning agent such as methylethylketoxime or phenols; and/or a thickening agent. Still further other pigments may be incorporated in the paint if they do not damage the ability of changing the color of the pigment for sensing gas leakage according to the present invention. Known solvents or dispersants such as mineral spirits, xylene or toluene are suitable for the coating film-forming agent used herein.

The amount of the pigments for sensing gas leakage according to the present invention is normally 5 to 70 % by weight, preferably 10 to 60 % by weight, more preferably 20 to 50 % by weight, based on the resin solid of the paint.

The pigments for sensing gas leakage according to the present invention can detect precisely and conveniently the leakage of combustible gases such as hydrogen, carbon monoxide, acetylene, methane, and the like, by applying in the form of paints to the surfaces of the outer walls and conduits of chemical reaction apparatuses, the surfaces of interior walls of various factories using reducing gases. The pigment for sensing gas leakage according to the present invention comprise a particulate substrate having a finely divided platinum group metal compound uniformly carried on the surface thereof. Therefore, they can be produced with low cost and extremely useful in industry since the amount of the expensive platinum group compounds can be lowered by allowing at least one of the platinum group compounds to be present on the surfaces of the substrate particles. Moreover, the existing of the surface coating agents on the substrate particles having at least one of the platinum group compounds present thereon can improve the weatherability of the pigments without impairing the gas sensing lability. Therefore, the pigments for sensing gas leakage of the present invention are extremely useful as those applicable to the surfaces of the pipes and the conduits of specifically outdoor disposed chemical reaction apparatuses and those under pressure and at high temperatures.

The present invention will be illustrated below with reference to some Examples.

Example 1

Titanium dioxide particles produced by a chloride process having an average particle size of about 0.25 $\mu$m were dispersed into water, wet milled, and classified to produce a slurry containing a concentration by weight of $TiO_2$ of 100

g/l, which slurry was heated to a temperature of 70 °C and adjusted by adding an 12 N aqueous solution of sodium hydroxide to a pH of 10 to 11.

Then, 2.5 g of palladium chloride and 25 g of a 36 % hydrochloric acid were added into 100 ml of water to produce a solution of palladium chloride. The solution of palladium chloride and a 12 N aqueous solution of sodium hydroxide were added in small portions to one liter of the slurry as described above while maintaining the pH thereof in the range of 10 to 11, followed by adding with a 3 N hydrochloric acid to adjust the pH of the slurry to 8, and thereafter the stirring was continued for 60 minutes to deposit hydrated palladium oxide onto the surfaces of titanium dioxide particles. The thus produced product was filtered, washed, and dried at a temperature of 110 °C to give a pigment for sensing gas leakage of the present invention (Sample A). This Sample A was comprised of titanium dioxide particles having 1.7 % by weight of the particles of hydrated palladium oxide deposited thereon. The hydrated palladium oxide was expressed as PdO.

Example 2

A pigment for sensing gas leakage of the present invention (Sample B) was prepared in identical procedure to that in Example 1, except that the Sample A obtained in Example 1 was heated at a temperature of 500 °C .

Example 3

A pigment for sensing gas leakage of the present invention (Sample C) was prepared in identical procedure to that in Example 1, except that a solution of palladium chloride having a composition of 5 g of palladium chloride, 50 g of a 36 % hydrochloric acid and 200 ml of water was employed. This Sample C was comprised of titanium dioxide particles having 3.4 % by weight of the particles of hydrated palladium oxide deposited thereon.

Example 4

A pigment for sensing gas leakage of the present invention (Sample D) was prepared in identical procedure to that in Example 1, except that the solution of palladium chloride was added while maintaining the pH of the slurry in the range of 6 to 8.

Example 5

Titanium dioxide particles produced by a sulfate process having an average particle size of about 0.23 $\mu$m were dispersed in water, wet milled, and classified to produce a slurry containing a concentration by weight of $TiO_2$ of 100 g/l, which slurry was heated to a temperature of 70 °C.

Then, 2.5 g of palladium chloride and 25 g of a 36 % hydrochloric acid were added into 100 ml of water to produce a solution of palladium chloride which was added in small portions to one liter of the aforementioned slurry, followed by adding a 12 N aqueous solution of sodium hydroxide to adjust the pH of the slurry to 7, and thereafter the stirring was continued for 60 minutes to deposit hydrated palladium oxide onto the surfaces of titanium dioxide particles. The thus produced product was filtered, washed, dried at a temperature of 110 °C, and then heated at a temperature of 500°C to give a pigment for sensing the gas leakage of the present invention (Sample E). On the titanium dioxide particles of this Sample E, there was deposited a palladium compound in the form of hydrated palladium oxide in an amount of 1.7 % by weight of the particles of hydrated palladium oxide expressed as PdO based on the weight of titanium dioxide.

Example 6

Titanium dioxide particles having an average particle size of about 0.25 $\mu$m produced by a chloride process were placed into water, wet ground, and classified to produce a slurry containing a concentration by weight of $TiO_2$ of 100 g/l, which slurry was heated to a temperature of 70 °C. Then, 5 g of palladium chloride and 50 g of a 36 % hydrochloric acid were added into 200 ml of water to produce a solution of palladium chloride which was added in small portions to one liter of the slurry as described above, followed by adding a 12 N aqueous solution of sodium hydroxide to adjust the pH of the slurry to 8, and thereafter the stirring was continued for 60 minutes to deposit hydrated palladium oxide onto the surfaces of titanium dioxide particles.

Then, 8 ml of a solution of sodium silicate having a concentration of 100 g/l expressed as $SiO_2$ by weight and a 12 N sulfuric acid were added to the slurry while maintaining the pH thereof in the range of 6 to 8, followed by adding with 30 ml of a solution of sodium aluminate having a concentration of 100 g/l expressed as $Al_2O_3$ by weight and a 12 N sulfuric acid while maintaining the pH of the slurry in the range of 6 to 8, and thereafter the stirring was continued for 60 minutes. The thus produced product was filtered, washed, and dried at a temperature of 110 °C to give a pigment for sensing gas leakage of the 'present invention (Sample F). This Sample F had 3.4 % by weight hydrated palladium oxide expressed as PdO based on the weight of titanium dioxide deposited on the particles.

Example 7

A pigment for sensing gas leakage (Sample G) was prepared in identical procedure to that in Example 6, except that the solution of sodium silicate and the sodium aluminate were not added.

Example 8

Example 6 was repeated, except that no sodium silicate was added, to produce a product which was filtered, washed, and heated at a temperature of 500 °C to produce a pigment for sensing gas leakage of the present invention (Sample H).

Example 9

Titanium dioxide particles having an average particle size of about 0.25 $\mu$m produced by a chloride process were dispersed in water, wet milled, and classified to produce a slurry containing a concentration by weight of $TiO_2$ of 100 g/l, which slurry was heated to a temperature of 70 °C, and adjusted its pH in the range of 10 to 11. Then, 2.5 g of palladium chloride and 25g of a 36 % hydrochloric acid were added into 100 ml of water to produce a solution of palladium chloride. The solution and a 12 N aqueous solution of sodium hydroxide were added in small portions to one liter of the slurry as described above while maintaining the pH of the slurry in the range of 10 to 11, followed by adding a 3 N hydrochloric acid to adjust the pH of the slurry to 8, and thereafter the stirring was continued for 60 minutes to deposit hydrated palladium oxide onto the surfaces of titanium dioxide particles.

Then, 8 ml of a solution of sodium silicate having a concentration of 100 g/l expressed as $SiO_2$ by weight and a 12 N sulfuric acid were added to the slurry while maintaining the pH thereof in the range of 6 to 8, followed by adding with 30 ml of a solution of sodium aluminate having a concentration of 100 g/l expressed as $Al_2O_3$ by weight and a 12 N sulfuric acid while maintaining the pH of the slurry in the range of 6 to 8, and thereafter the stirring was continued for 60 minutes. The thus produced product was filtered, washed, and dried at a temperature of 110 °C to give a pigment for sensing gas leakage of the present invention (Sample I). This Sample I had 1.7 % by weight hydrated palladium oxide expressed as PdO based on the weight of titanium dioxide deposited on the particles.

Example 10

A pigment for sensing gas leakage of the present invention (Sample J) was prepared by heating the Sample I obtained in Example 9 at a temperature of 500 °C.

Example 11

Example 9 was repeated, except that a solution of palladium chloride having a composition of 1.5 g palladium chloride, 15 g of a 36 % hydrochloric acid and 60 ml of water was used, to produce a dry powder which was heated at a temperature of 500 °C to produce a pigment for sensing gas leakage of the present invention (Sample K). This Sample K had hydrated palladium oxide in an amount of 1.0 % by weight expressed as PdO based on the weight of titanium dioxide.

Example 12

Titanium dioxide particles were coated with hydrated palladium oxide in the same procedure as in Example 9. The treated slurry was filtered, washed, heated at a temperature of 500 °C to produce a powder, then wet milled, and classified to produce a slurry containing a concentration by weight of $TiO_2$ of 100 g/l, which slurry was heated to a temperature of 70 °C, and then 8 ml of a solution of sodium silicate having a concentration of 100 g/l expressed as $SiO_2$ by weight and a 12 N sulfuric acid were added to one liter of the slurry while maintaining the pH thereof in the range of 6 to 8, followed by adding with 30 ml of a solution of sodium aluminate having a concentration of 100 g/l expressed as $Al_2O_3$ by weight and a 12 N sulfuric acid while maintaining the pH of the slurry in the range of 6 to 8, and thereafter the stirring was continued for 60 minutes. The thus produced product was filtered, washed, and dried at a temperature of 110 °C to give a pigment for sensing gas leakage of the present invention (Sample L).

Example 13

A pigment for sensing the gas leakage (Sample M) was prepared in the identical procedure to that in Example 9, except that instead of the the solution of sodium silicate, 8 ml of a solution of zirconyl sulfate having a concentration of 100g/l expressed as $ZrO_2$ by weight were added.

Test example

Each 40 g of the Samples obtained in the Examples as described above were mixed with 60 g of glass beads and 33.3 g of a resin solution for a mill base which was a mixture of 480 g of TESRACK 2150-50 (Normal dry alkyd resin, available from HITACH Chemical Polymer) and 320 g of mineral turpentine, and thereafter, shaken for 20 minutes to prepare each mill base. To 55 g of each mill base, there were added 85 g of a letdown liquid having the formulation defined below, followed by shaking in a paint shaker for 5 minutes to prepare paints. These paints were applied onto a glass plate to a dry film thickness of 50 μm and dried.

| Formulation of Letdown Liquid | |
| --- | --- |
| TESRACK 2150-50 (Normal dry alkyd resin, available from HITACH Chemical Polymer Co.) | 78.9 g |
| DISPERON 4200-20 (Dispersant, available from KUSUMOTO Chemical Co.) | 0.9 g |
| Lead naphthenate (available from DAI NIPPON INK Co.) | 3.1 g |
| cobalt naphthenate (available from DAI NIPPON INK Co.) | 0.6 g |
| Manganese naphthenate (available from DAI NIPPON INK Co.) | 0.6 g |
| Methyl ethyl ketone oxime (available from UBE KOSAN Co.) | 0.9 g |

Colors ($\underline{L}$ value, $\underline{a}$ value and $\underline{b}$ value) of these glass plates were measured with SUGA SM-4 Color computer (available from SUGA Shikenki Co.). Then, the Samples were placed in a 5 liter vessel at room temperature which was swept with hydrogen, and thereafter, colors ($\underline{L}'$ value, $\underline{a}'$ value and $\underline{b}'$ value) of the glass plates after passing a flow of hydrogen for 60 minutes at a rate of 500 ml/minute were measured and calculated for a degree of color change (ΔE) owing to hydrogen from the eqation:

$$\Delta E = \{(L-L')^2 + (a-a')^2 + (b-b')\}^{1/2}$$

The higher ΔE value indicates the larger degree of color change of a pigment formulated. When the ΔE is not less than 18, the color change of the pigment can be visually definitely determined, and particularly, the color change of a ΔE of 18 or more can be preferably easily discerned.

The identical tests unsing carbon monoxide and methane instead of hydrogen resulted in the gas sensing abilities on the same order as those with hydrogen.

Moreover, each paint with the aforementioned formulation was applied onto a panel to a dry film thickness of 50 μm and dried. Then, these panels were placed in a weathermeter and subjected to an accelerated weathering test. After 400 hours, the panels were measured for gloss to determine the gloss retention ratio (weatherability of pigment). The results are shown in Tables 1 and 2.

Table 1

| | Sample | ΔE |
| --- | --- | --- |
| Example 1 | A | 23 |
| Example 2 | B | 25 |
| Example 3 | C | 29 |
| Example 4 | C | 21 |
| Example 5 | E | 19 |

Table 2

| | Sample | ΔE | % Gloss Retention |
|---|---|---|---|
| Example 6 | F | 23 | 76 |
| Example 7 | G | 23 | 16 |
| Example 8 | H | 23 | 72 |
| Example 9 | I | 23 | 80 |
| Example 10 | J | 25 | 84 |
| Example 11 | K | 21 | 90 |
| Example 12 | L | 23 | 96 |
| Example 13 | M | 25 | 99 |

**Claims**

1. A pigment for sensing reducing gas leakage comprising of a particulate substrate having deposited thereon at least one selected from the group consisting of oxides, hydroxides and hydrated oxides of platinum group metal, except platinum.

2. A pigment for sensing reducing gas leakage comprising particulate substrate having at least one selected from the group consisting of oxides, hydroxides and hydrated oxides of platinum group metals present on the surface thereof, and in addition having at least one selected from the group consisting of oxides, hydroxides and hydrated oxides of aluminum, silicon, titanium, zinc, zirconium, tin, antimony and cerium present on the particles.

3. The pigment for sensing reducing gas leakage according to Claims 1 or 2, in which said particulate substrate is inorganic particles.

4. The pigment for sensing reducing gas leakage according to Claims 1 or 2, in which said particulate substrate is titanium dioxide particles having an average particle size of 0.01 to 0.5 μm.

5. The pigment for sensing reducing gas leakage according to Claims 1 or 2, in which said platinum group metal is palladium.

6. The pigment for sensing reducing gas leakage according to Claims 1 or 2, in which said oxides, hydroxides and hydrated oxides of platinum group metals are present in an amount of 0.5 to 10 % by weight expressed as the platinum group metal oxides based on the weight of the particulate substrate.

7. The pigment for sensing reducing gas leakage according to claim 2, in which the particulate substrate comprises $TiO_2$, the oxide of the platinum group metal on the substrate is PdO, and the substrate has aluminum oxide and silicon oxide thereon.

8. A process for producing the pigment for sensing reducing gas leakage as defined in Claim 1, comprising the steps of adding at least one of salts of platinum group metals to a slurry of particulate substrate, neutralizing the resultant mixture to deposit at least one of said platinum group compounds on the surfaces of said particulate substrate, separating solids from the slurry, and heating the solids at a temperature of 250 to 600 °C.

9. The process for producing the pigment for sensing reducing gas leakage as defined Claim 1, comprising the steps of adding at least one of platinum group metal salts and an alkali or an acid to a slurry of particulate substrate while maintaining the pH of the slurry in the range from 3 to 11, to neutralize the resultant mixture, thereby depositing at least one of platinum group compounds on the surfaces of the particulate substrate, and separating solids from the slurry.

10. The process for producing the pigment for sensing reducing gas leakage as defined in Claims 1, comprising the steps of adding at least one of platinum group metal salts and an alkali or an acid to a slurry of particulate substrate while maintaining the pH of the slurry in the range from 3 to 11, to neutralize the resultant mixture, thereby depositing at least one of platinum group compounds on the surfaces of said particulate substrate, separating solids from the slurry, and heating the solids at a temperature of 250 to 600 °C.

11. A process for producing a pigment for sensing reducing gas leakage comprising the steps of adding at least one of salts of platinum group metals to a slurry of particulate substrate, neutralizing the resultant mixture to deposit at least one of said platinum group compounds on the surfaces of said particulate substrate, and then adding to said slurry at least one of compounds of aluminum, silicon, titanium, zinc, zirconium, tin, antimony and cerium, neutralizing the resultant mixture to deposit at least one of oxides, hydroxides and hydrated oxides of aluminum, silicon, titanium, zinc, zirconium, tin, antimony and cerium, on the particles, and then separating solids from the slurry.

12. A process for producing a pigment for sensing reducing gas leakage comprising the steps of adding at least one of salts of platinum group metals to a slurry of particulate substrate, neutralizing the resultant mixture to deposit at least one of said platinum group compounds on the surfaces of said particulate substrate, separating solids from the slurry, heating the solids at a temperature of 250 to 600 °C to produce a powder, dispersing said powder into water to produce an aqueous slurry, and then adding to said aqueous slurry at least one of compounds of aluminum, silicon, titanium, zinc, zirconium, tin, antimony and cerium, neutralizing the resultant mixture to deposit at least one of oxides, hydroxides and hydrated oxides of aluminum, silicon, titanium, zinc, zirconium, tin, antimony and cerium, on the particles, and then separating solids from the slurry.

13. The process for producing a pigment for sensing reducing gas leakage according to Claims 11 or 12, in which said neutralization of said platinum group metal salts is performed by adding an alkali or an acid while maintaining the pH of the slurry in the range from 3 to 11.

14. The process for producing a pigment for sensing reducing gas leakage according to Claims 11 or 12, in which said neutralization of said compounds of aluminum, silicon, titanium, zinc, zirconium, tin, antimony and cerium is performed by adding an alkali or an acid while maintaining the pH of the slurry in the range from 4 to 10.

15. The process for producing a pigment for sensing reducing gas leakage according to Claim 10, in which said solids after separation thereof is further heated at a temperature of 250 to 600 °C.

16. A paint composition containing a resin as a coating film-forming agent and the pigment for sensing reducing gas leakage according to claim 1.

17. A paint composition containing a resin as a coating film-forming agent and the pigment for sensing reducing gas leakage according to claim 2.

**Patentansprüche**

1. Pigment zum Aufspüren des Austritts eines reduzierenden Gases, bestehend aus einem teilchenförmigen Substrat mit einer darauf befindlichen Ablagerung aus mindestens einer Komponente aus der Gruppe Oxide, Hydroxide und hydratisierte Oxide eines Metalls der Platingruppe, mit Ausnahme von Platin.

2. Pigment zum Aufspüren des Austritts eines reduzierenden Gases, umfassend ein teilchenförmiges Substrat mit mindestens einer auf seiner Oberfläche vorhandenen bzw. befindlichen Komponente, ausgewählt aus der Gruppe Oxide, Hydroxide und hydratisierte Oxide von Metallen der Platingruppe, und darüber hinaus mindestens einer auf den Teilchen vorhandenen bzw. befindlichen Komponente, ausgewählt aus der Gruppe Oxide, Hydroxide und hydratisierte Oxide von Aluminium, Silicium, Titan, Zink, Zirkonium, Zinn, Antimon und Cer.

3. Pigment zum Aufspüren des Austritts eines reduzierenden Gases nach Anspruch 1 oder 2, wobei es sich bei dem teilchenförmigen Substrat um anorganische Teilchen handelt.

4. Pigment zum Aufspüren des Austritts eines reduzierenden Gases nach Anspruch 1 oder 2, wobei es sich bei dem teilchenförmigen Substrat um Titandioxidteilchen einer durchschnittlichen Teilchengröße von 0,01 bis 0,5 µm handelt.

5. Pigment zum Aufspüren des Austritts eines reduzierenden Gases nach Anspruch 1 oder 2, wobei es sich bei dem Metall der Platingruppe um Palladium handelt.

6. Pigment zum Aufspüren des Austritts eines reduzierenden Gases nach Anspruch 1 oder 2, wobei die Oxide, Hydroxide und hydratisierten Oxide von Metallen der Platingruppe in einer Menge, bezogen auf das Gewicht des teilchenförmigen Substrats, von 0,5 bis 10 Gew.-%, ausgedrückt als Oxid(e) des Metalls der Platingruppe, vorhanden sind.

7. Pigment zum Aufspüren des Austritts eines reduzierenden Gases nach Anspruch 2, wobei das teilchenförmige Substrat aus $TiO_2$ und das auf dem Substrat befindliche Oxid des Metalls der Platingruppe aus PdO bestehen und auf das Substrat Aluminiumoxid und Siliciumoxid aufgetragen sind.

8. Verfahren zur Herstellung des Pigments zum Aufspüren des Austritts eines reduzierenden Gases nach Anspruch 1, umfassend folgende Stufen: Zugabe mindestens eines Salzes von Metallen der Platingruppe zu einer Aufschlämmung des teilchenförmigen Substrats, Neutralisieren des erhaltenen Gemischs zur Ablagerung mindestens einer der Verbindungen der Platingruppe auf den Oberflächen des teilchenförmigen Substrats, Abtrennen der Feststoffe aus der Aufschlämmung und Erwärmen der Feststoffe auf eine Temperatur von 250 bis 600°C.

9. Verfahren zur Herstellung des Pigments zum Aufspüren des Austritts eines reduzierenden Gases nach Anspruch 1, umfassend folgende Stufen: Zugabe mindestens eines Salzes eines Metalls der Platingruppe und eines Alkalis oder einer Säure zu einer Aufschlämmung eines teilchenförmigen Substrats unter Aufrechterhalten des pH-Werts der Aufschlämmung im Bereich von 3 bis 11 zur Neutralisation des erhaltenen Gemischs unter Ablagerung mindestens einer Verbindung der Platingruppe auf den Oberflächen des teilchenförmigen Substrats und Abtrennen von Feststoffen aus der Aufschlämmung.

10. Verfahren zur Herstellung des Pigments zum Aufspüren des Austritts eines reduzierenden Gases nach Anspruch 1, umfassend folgende Stufen: Zugabe mindestens eines Salzes eines Metalls der Platingruppe und eines Alkalis oder einer Säure zu einer Aufschlämmung eines teilchenförmigen Substrats unter Aufrechterhalten des pH-Werts der Aufschlämmung im Bereich von 3 bis 11 zur Neutralisation des erhaltenen Gemischs unter Ablagerung mindestens einer Verbindung der Platingruppe auf den Oberflächen des teilchenförmigen Substrats, Abtrennen der Feststoffe aus der Aufschlämmung und Erwärmen der Feststoffe auf eine Temperatur von 250 bis 600°C.

11. Verfahren zur Herstellung eines Pigments zum Aufspüren des Austritts eines reduzierenden Gases, umfassend folgende Stufen: Zugabe mindestens eines Salzes von Metallen der Platingruppe zu einer Aufschlämmung eines teilchenförmigen Substrats, Neutralisieren des erhaltenen Gemischs unter Ablagerung mindestens einer Verbindung der Platingruppe auf den Oberflächen des teilchenförmigen Substrats und anschließende Zugabe mindestens einer Verbindung von Aluminium, Silicium, Titan, Zink, Zirkonium, Zinn, Antimon und Cer, zu der Aufschlämmung, Neutralisieren des erhaltenen Gemischs zur Ablagerung mindestens eines Oxids, Hydroxids und hydratisierten Oxids von Aluminium, Silicium, Titan, Zink, Zirkonium, Zinn, Antimon und Cer, auf den Teilchen und anschließende Abtrennung der Feststoffe aus der Aufschlämmung.

12. Verfahren zur Herstellung eines Pigments zum Aufspüren des Austritts eines reduzierenden Gases, umfassend folgende Stufen: Zugabe mindestens eines Salzes von Metallen der Platingruppe zu einer Aufschlämmung eines teilchenförmigen Substrats, Neutralisieren des erhaltenen Gemischs zur Ablagerung mindestens einer Verbindung der Platingruppe auf den Oberflächen des teilchenförmigen Substrats, Abtrennen der Feststoffe aus der Aufschlämmung, Erwärmen der Feststoffe auf eine Temperatur von 250 bis 600°C zur Herstellung eines Pulvers, Dispergieren des Pulvers in Wasser zur Gewinnung einer wäßrigen Aufschlämmung und anschließende Zugabe mindestens einer Verbindung von Aluminium, Silicium, Titan, Zink, Zirkonium, Zinn, Antimon und Cer, zu der wäßrigen Aufschlämmung, Neutralisieren des erhaltenen Gemischs zur Ablagerung mindestens eines Oxids, Hydroxids und hydratisierten Oxids von Aluminium, Silicium, Titan, Zink, Zirkonium, Zinn, Antimon und Cer auf den Teilchen und anschließende Abtrennung der Feststoffe aus der Aufschlämmung.

13. Verfahren zur Herstellung eines Pigments zum Aufspüren des Austritts eines reduzierenden Gases nach Anspruch 11 oder 12, wobei die Neutralisation der Salze eines Metalls der Platingruppe durch Zusatz eines Alkalis oder einer Säure unter Aufrechterhalten des pH-Werts der Aufschlämmung im Bereich von 3 bis 11 erfolgt.

14. Verfahren zur Herstellung eines Pigments zum Aufspüren eines Austritts eines reduzierenden Gases nach Anspruch 11 oder 12, wobei die Neutralisation der Verbindungen von Aluminium, Silicium, Titan, Zink, Zirkonium, Zinn, Antimon und Cer durch Zusatz eines Alkalis oder einer Säure unter Aufrechterhalten des pH-Werts der Aufschlämmung im Bereich von 4 bis 10 erfolgt.

15. Verfahren zur Herstellung eines Pigments zum Aufspüren des Austritts eines reduzierenden Gases nach Anspruch 10, wobei die Feststoffe nach ihrer Abtrennung weiter auf eine Temperatur von 250 bis 600°C erwärmt werden.

16. Lackzubereitung mit einem Harz als Filmbildner und dem Pigment zum Aufspüren des Austritts eines reduzierenden Gases nach Anspruch 1.

17. Lackzubereitung mit einem Harz als Filmbildner und dem Pigment zum Aufspüren des Austritts eines reduzierenden Gases nach Anspruch 2.

**Revendications**

1. Pigment pour la détection d'une fuite de gaz réducteur, constitué d'un substrat particulaire sur lequel est déposé au moins un composé choisi dans le groupe constitué par les oxydes, hydroxydes et oxydes hydratés des métaux du groupe du platine, à l'exception du platine.

2. Pigment pour la détection d'une fuite de gaz réducteur, comprenant un substrat particulaire ayant sur sa surface au moins un composé choisi dans le groupe constitué par les oxydes, hydroxydes et oxydes hydratés des métaux du groupe du platine et de plus ayant au moins un composé choisi dans le groupe constitué par les oxydes, hydroxydes et oxydes hydratés de l'aluminium, du silicium, du titane, du zinc, du zirconium, de l'étain, de l'antimoine et du cérium présent sur les particules.

3. Pigment pour la détection d'une fuite de gaz réducteur selon les revendications 1 ou 2, dans lequel ledit substrat particulaire est fait de particules minérales.

4. Pigment pour la détection d'une fuite de gaz réducteur selon les revendications 1 ou 2, dans lequel ledit substrat particulaire est fait de particules de dioxyde de titane ayant une granulométrie moyenne de 0,01 à 0,5 μm.

5. Pigment pour la détection d'une fuite de gaz réducteur selon les revendications 1 ou 2, dans lequel ledit métal du groupe du platine est le palladium.

6. Pigment pour la détection d'une fuite de gaz réducteur selon les revendications 1 ou 2, dans lequel lesdits oxydes, hydroxydes et oxydes hydratés de métaux du groupe du platine sont présents en une proportion de 0,5 à 10 % en poids exprimée en oxydes de métal du groupe du platine relativement au poids du substrat particulaire.

7. Pigment pour la détection d'une fuite de gaz réducteur selon la revendication 2, dans lequel le substrat particulaire comprend du $TiO_2$, l'oxyde du métal du groupe du platine sur le substrat est PdO et le substrat porte de l'oxyde d'aluminium et de l'oxyde de silicium.

8. Procédé pour la production du pigment pour la détection d'une fuite de gaz réducteur selon la revendication 1, comprenant les étapes d'addition d'au moins un des sels des métaux du groupe du platine à une suspension d'un substrat particulaire, neutralisation du mélange obtenu pour déposer au moins un desdits composés du groupe du platine sur les surfaces dudit substrat particulaire, séparation des solides de la suspension et chauffage des solides à une température de 250 à 600°C.

9. Procédé pour la production du pigment pour la détection d'une fuite de gaz réducteur selon la revendication 1, comprenant les étapes d'addition d'au moins un des sels des métaux du groupe du platine et d'un alcali ou d'un acide à une suspension de substrat particulaire, en maintenant le pH de la suspension dans la gamme de 3 à 11, pour neutraliser le mélange obtenu, afin de déposer au moins un des composés du groupe du platine sur les surfaces du substrat particulaire, et séparation des solides de la suspension.

10. Procédé pour la production du pigment pour la détection d'une fuite de gaz réducteur selon la revendication 1, comprenant les étapes d'addition d'au moins un des sels des métaux du groupe du platine et d'un alcali ou d'un acide à une suspension de substrat particulaire, en maintenant le pH de la suspension dans la gamme de 3 à 11, pour neutraliser le mélange obtenu, afin de déposer au moins un des composés du groupe du platine sur les surfaces dudit substrat particulaire, séparation des solides de la suspension et chauffage des solides à une température de 250 à 600°C.

11. Procédé pour la production d'un pigment pour la détection d'une fuite de gaz réducteur, comprenant les étapes d'addition d'au moins un des sels des métaux du groupe du platine à une suspension d'un substrat particulaire, neutralisation du mélange obtenu pour déposer au moins un desdits composés du groupe du platine sur les surfaces dudit substrat particulaire, puis addition à ladite suspension d'au moins un des composés de l'aluminium, du silicium, du titane, du zinc, du zirconium, de l'étain, de l'antimoine et du cérium, neutralisation du mélange obtenu pour déposer au moins un des oxydes, hydroxydes et oxydes hydratés de l'aluminium, de silicium, du titane, du zinc, du zirconium, de l'étain, de l'antimoine et du cérium sur les particules, puis séparation des solides de la suspension.

12. Procédé pour la production d'un pigment pour la détection d'une fuite de gaz réducteur, comprenant les étapes d'addition d'au moins un des sels des métaux du groupe du platine à une suspension d'un substrat particulaire, neutralisation du mélange obtenu pour déposer au moins un desdits composés du groupe du platine sur les surfaces dudit substrat particulaire, séparation des solides de la suspension, chauffage des solides à une température de 250 à 600°C pour produire une poudre, dispersion de ladite poudre dans l'eau pour produire une suspension aqueuse, puis addition à ladite suspension aqueuse d'au moins un des composés de l'aluminium, du silicium, du titane, du zinc, du zirconium, de l'étain, de l'antimoine et du cérium, neutralisation du mélange obtenu pour déposer au moins un des oxydes, hydroxydes et oxydes hydratés de l'aluminium, du silicium, du titane, du zinc, du zirconium, de l'étain, de l'antimoine et du cérium sur les particules, puis séparation des solides d'avec la suspension.

13. Procédé pour la production d'un pigment pour la détection d'une fuite de gaz réducteur selon les revendications 11 ou 12, dans lequel ladite neutralisation desdits sels de métal du groupe du platine est effectuée par addition d'un alcali ou d'un acide, avec maintien du pH de la suspension dans la gamme de 3 à 11.

14. Procédé pour la production d'un pigment pour la détection d'une fuite de gaz réducteur selon les revendications 11 ou 12, dans lequel ladite neutralisation desdits composés de l'aluminium, du silicium, du titane, du zinc, du zirconium, de l'étain, de l'antimoine et du cérium est effectée par addition d'un alcali ou d'un acide avec maintien du pH de la suspension dans la gamme de 4 à 10.

15. Procédé pour la production d'un pigment pour la détection d'une fuite de gaz réducteur selon la revendication 10, dans lequel lesdits solides, après leur séparation, sont de plus chauffés à une température de 250 à 600°C.

16. Composition de peinture contenant une résine en tant qu'agent formant un film de revêtement et le pigment pour la détection d'une fuite de gaz réducteur selon la revendication 1.

17. Composition de peinture contenant une résine en tant qu'agent formant un film de revêtement et le pigment pour la détection d'une fuite de gaz réducteur selon la revendication 2.